# EUROPÄISCHE PATENTSCHRIFT

(11) **EP 0 808 936 B1**
(45) Veröffentlichungstag und Bekanntmachung des Hinweises auf die Patenterteilung: **12.06.2002**
(21) Anmeldenummer: 97104159.5
(22) Anmeldetag: 12.03.1997
(51) Int. Cl.: D06F 39/00, D06F 35/00

(54) **Programmgesteuerte Waschmaschine**
Programme-controlled washing machine
Machine à laver commandée par programme

(30) Priorität: 22.05.1996 DE 19620512
(43) Veröffentlichungstag der Anmeldung: 26.11.1997
(73) Patentinhaber: Miele & Cie. GmbH & Co., D-33332 Gütersloh (DE)
(72) Erfinder: Bazzi, Reto, Dr., 8800 Thatwil (CH)

(56) Entgegenhaltungen:
- CH-A- 452 470
- GB-A- 736 024
- PATENT ABSTRACTS OF JAPAN vol. 015, no. 080 (C-0810), 25. Februar 1991 & JP 02 302295 A (MATSUSHITA ELECTRIC IND CO LTD), 14. Dezember 1990
- PATENT ABSTRACTS OF JAPAN vol. 014, no. 480 (C-0771), 19. Oktober 1990 & JP 02 198596 A (TOSHIBA CORP), 7. August 1990
- PATENT ABSTRACTS OF JAPAN vol. 018, no. 101 (C-1168), 18. Februar 1994 & JP 05 300995 A (SANYO ELECTRIC CO LTD), 16. November 1993
- PATENT ABSTRACTS OF JAPAN vol. 015, no. 060 (C-0805), 13. Februar 1991 & JP 02 289298 A (MATSUSHITA ELECTRIC IND CO LTD), 29. November 1990

## Beschreibung

Die Erfindung betrifft eine programmgesteuerte Waschmaschine mit Bedienelementen zur Einstellung von mindestens in der Temperatur unterscheidbaren Waschprogrammen, von denen mindestens eines ein selbsttätig ablaufendes Hygieneprogramm ist und ein Aufheizen der Waschflüssigkeit auf einen festgelegten Mindestwert, ein anschließendes Abkühlen der Waschflüssigkeit durch Zugabe von Kaltwasser und ein Abpumpen der abgekühlten Waschflüssigkeit beinhaltet. Daneben betrifft die Erfindung ein Verfahren zur Durchführung eines Hygieneprogramms in einer solchen Waschmaschine.

Bei Waschmaschinen ist es allgemein bekannt, Waschprogramme mit einer auf ca. 60°C erhitzten Waschflüssigkeit durchzuführen (JP-A-02 302 295, JP-A-02 289 298). Hierdurch wird neben der Reinigung der Wäsche noch eine Desinfektion der Wäsche und der mit der Waschflüssigkeit in Berührung stehenden Geräteteile erreicht.

Darüber hinaus ist es bekannt (CH-A-452 470) bei solchen Waschmaschinen im Anschluss an die Waschphase kaltes Wasser in den Laugenbehälter (die Trommel) einzufüllen, um die Waschflüssigkeit abzukühlen..

Beim Waschen mit niedrigen Temperaturen werden in der Wäsche vorhandene Bakterien und Hautpilzerreger nicht abgetötet. Wird eine solche Waschmaschine in einem Mehrfamilienhaus von mehreren Personen benutzt, muss damit gerechnet werden, dass durch die Waschmaschine Krankheitserreger von Familie zu Familie übertragen werden. Da in der modernen Waschtechnik aufgrund der guten Reinigungswirkung der Waschverfahren und der verwendeten Waschmittel, aber auch wegen der Empfindlichkeit der gewaschenen Textilien immer weniger Kochwaschprogramme genutzt werden, findet eine thermische Desinfektion der Maschine durch das Waschprogramm selbst immer seltener statt.

Der Erfindung stellt sich somit das Problem, eine Waschmaschine bzw. ein Verfahren zur Durchführung eines Hygieneprogramms in einer solchen Waschmaschine zu offenbaren, mit dem die Verschleppung von Krankheitserregern vermieden wird.

Erfindungsgemäß wird dieses Problem durch eine programmgesteuerte Waschmaschine mit den Merkmalen des Anspruchs 1.

Die erfindungsgemäß gestaltete Waschmaschine besitzt ein Anzeigeelement, mit welchem dem Benutzer signalisiert wird, ob im letzten Programm eine Aufheizung der Waschflüssigkeit auf eine Mindesttemperatur von 60°C erfolgte. Hierdurch kann der Benutzer selbst über die Notwendigkeit der Durchführung eines Hygieneprogramms entscheiden.

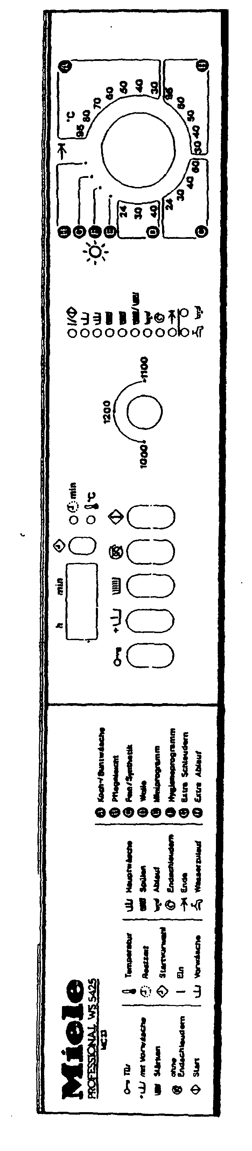

Ein Ausführungsbeispiel der Erfindung ist anhand einer Zeichnung rein schematisch dargestellt und wird im nachfolgenden näher beschrieben. Die Figur zeigt das Bedienfeld einer Waschmaschine. Mit einem Drehwahlschalters sind selbsttätig ablaufende Programme A bis H wählbar, wobei hier die Funktionen "Extra Schleudem" und Extra Abiauf" auch als Programm bezeichnet werden. Die Programme "Koch-/Buntwfische" (A), "Pflegeleicht" (B), "Fein/Synthetik" (C) und "Wolle" sind in der Temperatur variabel.

Mit dem Programmpunkt "F" wird dem Benutzer ein Hygieneprogramm zur Desinfektion der Waschmaschine angeboten. Um dem Benutzer die Notwendigkeit der Durchführung eines Hygieneprogramms zu signalisieren, ist auf der Bedienblende des Waschautomaten neben dem Symbol "F" für dieses Programm eine LED angeordnet. Diese leuchtet auf, wenn im letzten Programmdurchlauf ein Programm gewählt wurde, bei dem die Temperatur der Waschlauge niedriger als 60 °C war. In diesem Fall ist es sinnvoll, das "Hygieneprogramm" (F) zu wählen, da durch das letzte Programm selbst keine Desinfektion der Waschmaschine erfolgte. Das Programm sollte vorzugsweise ohne Wäsche durchgeführt werden. Der Programmablauf wird folgendermaßen beschrieben:

Zunächst erfolgt ein Wassereinlauf bis auf das übliche Waschniveau. Anschließend wird die Trommel wie bei Waschprogrammen reversierend gedreht. In einem Heizschritt wird die eingefüllte Waschflüssigkeit bis auf eine Temperatur von 60 °C aufgeheizt. Danach ist die Desinfektion der Waschmaschine vollzogen. Anschließend erfolgt eine Zugabe von Kaltwasser. Die Menge beträgt 50 - 70 % der erhitzten Waschflüssigkeit und ist somit gegenüber der Wassermenge, die in Waschprogrammen zur Laugenabkühlung verwendet wird, erhöht. Dies geschieht, um zu gewährleisten, dass die in das Abflusssystem geleitete Waschflüssigkeit keine Schäden verursacht. Zum anderen muss sichergestellt werden, dass die Waschmaschine so stark abgekühlt ist, dass weder der Benutzer noch anschließend eingefüllte Wäsche durch die vorherige Aufheizung Schaden nehmen können. Im Anschluss an die Laugenabkühlung wird die Waschflüssigkeit abgepumpt, das Programm ist beendet. Die Laufzeit des Programms beträgt ca. 15 min. Gegenüber herkömmlichen Kochwaschprogrammen ist der Wasserverbrauch durch Weglassen der Spülgänge erheblich vermindert. Hierdurch wird auch eine Energieeinsparung bewirkt.

## Patentansprüche

1. Programmgesteuerte Waschmaschine mit Bedienelementen zur Einstellung von mindestens in der Temperatur unterscheidbaren Waschprogrammen, von denen mindestens eines ein selbsttätig ablaufendes Hygieneprogramm ist und ein Aufheizen der Waschflüssigkeit auf einen festgelegten Mindestwert von 60°C, ein anschließendes Abkühlen der Waschflüssigkeit durch Zugabe von Kaltwasser und ein Abpumpen der abgekühlten Waschflüssigkeit beinhaltet, **gekennzeichnet durch** ein Anzeigeelement, mit welchem dem Benutzer signalisierbar ist, ob im letzten durchgeführten Programm eine Aufheizung der Waschflüssigkeit auf eine Mindesttemperatur von 60°C erfolgt ist.

## Claims

1. Program-controlled washing machine having operating members for the selecting of washing programs, which are distinguishable by at least the temperature, of which at least one is an automatically executing hygiene program and contains a heating up of the washing fluid to a pre-determined minimum value of 60°, a subsequent cooling down of the washing fluid through the addition of cold water and a pumping away of the cooled washing fluid, **characterised by** an indicating member, via which the user can be signalled whether the washing fluid has been heated up to a minimum temperature of 60° in the last program executed.

## Revendications

1. Machine à laver commandée par des programmes avec des éléments de commande pour le réglage de programmes de lavage pouvant se différencier au moins en ce qui concerne la température, dont au moins un est un programme d'hygiène se déroulant automatiquement et incluant un réchauffage du liquide de lavage à une valeur minimale déterminée de 60°C, suivi d'un refroidissement du liquide de lavage par une adduction d'eau froide et d'un pompage du liquide de lavage refroidi, **caractérisée par** un élément d'affichage, avec lequel il peut être signalé à l'utilisateur si dans le dernier programme réalisé un réchauffage du liquide de lavage à une température minimale de 60°C a eu lieu.
